(19) Europäisches Patentamt
European Patent Office
Office européen des brevets

(11) **EP 2 835 790 B1**

(12) **EUROPÄISCHE PATENTSCHRIFT**

(45) Veröffentlichungstag und Bekanntmachung des Hinweises auf die Patenterteilung:
**26.05.2021  Patentblatt 2021/21**

(51) Int Cl.:
*G07C 5/04* *(2006.01)*          *B60W 30/17* *(2020.01)*

(21) Anmeldenummer: **14001064.6**

(22) Anmeldetag: **21.03.2014**

(54) **VERFAHREN UND VORRICHTUNG ZUR LENKZEITOPTIMIERUNG BEI FAHRZEUGEN**

METHOD AND DEVICE FOR OPTIMISING VEHICLE DRIVING TIMES

PROCÉDÉ ET DISPOSITIF D'OPTIMISATION DU TEMPS DE CONDUITE POUR DES VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2013  DE 102013013025**

(43) Veröffentlichungstag der Anmeldung:
**11.02.2015  Patentblatt 2015/07**

(73) Patentinhaber: **MAN Truck & Bus SE**
**80995 München (DE)**

(72) Erfinder:
• **Zimmermann, Andreas**
**80995 München (DE)**

• **Dörner, Karlheinz**
**85757 Karlsfeld (DE)**
• **Huber, Martin**
**81243 München (DE)**

(74) Vertreter: **Liebl, Thomas et al**
**Neubauer - Liebl - Bierschneider - Massinger**
**Münchener Straße 49**
**85051 Ingolstadt (DE)**

(56) Entgegenhaltungen:
**EP-A2- 0 785 533       WO-A1-2014/147145**
**DE-A1- 10 349 434     DE-A1-102012 006 838**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der Erfindung ist ein Verfahren zur Lenkzeitoptimierung bei Fahrzeugen gemäß dem Oberbegriff des Anspruchs 1, ein Verfahren zur Lenkzeitoptimierung bei Fahrzeugen mit einem Fahrerassistenzsystem gemäß dem Oberbegriff des Anspruchs 5, eine Vorrichtung zur Durchführung des Verfahrens sowie ein Fahrzeug.

Fahrer von Fahrzeugen im gewerblichen Güterverkehr unterliegen hinsichtlich der mittels Tachografen registrierten und damit überprüfbaren Lenkzeiten in vielen Ländern oder länderübergreifenden Zusammenschlüssen strengen Regeln deren Verletzung mit empfindlichen Strafen geahndet wird. In der Europäischen Gemeinschaft besteht mit der Tachografen-Verordnung 1266/2009 ein Regelwerk, das für Fahrer von Fahrzeugen mit einem zulässigen Höchstgewicht von über 3,5 t im gewerblichen Güter- oder Personenverkehr gilt. Ein Teil dieses Regelwerks ist die sogenannte 1-Minuten-Regel. Diese sieht vor, dass eine Kalenderminute für diejenige Tätigkeit angesetzt wird, die während dieser Minute als längste Tätigkeit ermittelt wurde. Dies gilt mit der Einschränkung, dass die vorausgehende und die nachfolgende Minute keine Lenktätigkeit waren (3-Minuten-Regel). Ist dies nämlich der Fall, gilt auch die Minute dazwischen als Lenkminute. In der Praxis bedeutet dies, dass innerhalb einer Kalenderminute kumuliert maximal 29 Sekunden Lenktätigkeit anfallen dürfen, ohne dass die Minute als Lenkminute registriert wird. Bezweckt wird mit dieser Regelung, dass ein kurzfristiges Bewegen des Fahrzeugs möglich wird, ohne die Lenkzeit zu erhöhen.

Nach diesen in der Tachografen-Verordnung 1266/2009 definierten Regeln oder gegebenenfalls in anderen geographischen Regionen geltenden anderen Regeln registrieren die verpflichtend in den Fahrzeugen vorhandenen Tachografen die Lenkzeit.

Die Regelung nach der Tachografen-Verordnung 1266/2009 ermöglicht zwar theoretisch bei relativ kurzen Lenkvorgängen Lenkzeit einzusparen, allerdings ist es in der Praxis dem Fahrzeugführer nicht möglich, diese eng gesetzten Vorgaben zu überwachen, so dass eine Lenkzeiteinsparung dem Zufall überlassen bleibt.

In Kraftfahrzeugen nach dem heutigen technischen Stand kommen häufig sogenannte Fahrerassistenzsysteme zum Einsatz, die den Fahrer einerseits von Routinetätigkeiten befreien und die andererseits vor Gefahrensituationen warnen oder aktiv in das Fahrgeschehen selbstständig eingreifen.

Ein derartiges Fahrerassistenzsystem ist unter der Bezeichnung Adaptive Cruise Control (ACC), bzw. in einer neueren Version als Adaptive Cruise Control Stop&Go (ACC Stop&Go) bekannt geworden. Hinter dieser Bezeichnung verbirgt sich ein programmgestütztes Verfahren, das auf einem Steuergerät zur Ausführung kommt und das vorausfahrende Fahrzeuge erkennt, deren Geschwindigkeiten ermittelt und durch Brems- und Motoreingriffe einen gewünschten Abstand einhält. Während das ursprüngliche ACC-Verfahren bei niedrigen Geschwindigkeiten nicht eingesetzt werden konnte, erlaubt das neuere ACC Stop&Go durch verbesserte Sensoren die Verwendung bis zum Stillstand. Rollt der Verkehr an, genügt eine kurze Bestätigung des Fahrers, und das Fahrzeug folgt wieder selbstständig dem Vorausfahrenden. Selbstverständlich bleiben bei den ACC-Verfahren alle Eingriffsmöglichkeiten des Fahrers erhalten.

Kern der vorstehend beschriebenen Fahrerassistenzsysteme sind häufig Radarsensoren, deren Aufgabe es ist, Objekte zu erkennen sowie deren Geschwindigkeit und Position im Vergleich zur Bewegung des den Radarsensor tragenden Fahrzeugs zu ermitteln. Zu diesem Zweck sendet der Radarsensor Signale aus, die im sogenannten Mikrowellenfrequenzbereich liegen und die von den im Strahlbereich des Radarsensors befindlichen Objekten reflektiert werden. Heute üblich sind Dauerstrichradargeräte mit Frequenzmodulation (FMCW), die zum Beispiel im Frequenzbereich 76 GHz bis 77 GHz senden. Aus dem Vergleich von Phase und Amplitude des reflektierten Radarsignals mit Phase und Amplitude des ausgesandten Signals werden Rückschlüsse auf die Position eines Objektes gezogen. Die Relativgeschwindigkeit und Entfernung eines Objektes zu dem den Radarsensor tragenden Fahrzeugs wird anhand des so genannten Doppler-Effektes, also der Frequenzverschiebung zwischen dem ausgesandten und dem empfangenen Signal und der Zeitverzögerung zwischen diesen ermittelt.

Selbstverständlich lassen sich auch andere Sensortechnologien zum Beispiel Lasersensoren etc. für das angesprochene Fahrerassistenzsystem verwenden, so dass die beschriebenen Radarsensoren lediglich als Beispiel zu verstehen sind und den Umfang der vorliegenden Erfindung in keiner Weise einschränken.

Ein weiteres Fahrerassistenzsystem ist unter der Bezeichnung Lenkzeitassistenzsystem aus der DE 10 2012 006 838 A1 bekannt geworden. Es handelt sich hierbei um ein Verfahren zur Unterstützung bei der Verwaltung von Lenkzeiten eines Fahrers in einem Fahrzeug. Hierbei ist vorgesehen, dass innerhalb eines durch den Fahrer aktivierten "Pausenmodus" für die Dauer des Pausenmodus die Lenkaktivität des Fahrzeugs innerhalb jeweils eines Erfassungsintervalls erfasst wird und eine Lenkaktivität, die eine vorgebbare Maximal-Lenkaktivitätsdauer innerhalb des jeweils einen Erfassungsintervalls überschreitet, verhindert wird. Erreicht werden soll dies dadurch, dass vor dem Erreichen der Maximal-Lenkaktivitätsdauer ein autonomer Bremsvorgang eingeleitet wird.

Nachteilig ist bei dieser Vorgehensweise, dass sich autonome Bremsvorgänge nur in bestimmten Verkehrssituationen ohne Gefahr für den nachfolgenden Verkehr durchführen lassen, beispielsweise dann, wenn auf einem Parkplatz freigewordener Parkraum ausgefüllt werden soll und beim Rangieren die maximal zulässige Lenkzeit überschritten würde. Weiterhin nachteilig ist, dass sich das in der DE 10 2012 006 838 A1 beschriebene System nur während des Pausenmodus aktivieren lässt.

Aus der WO 2014/147145 A1 ist ein Verfahren zum Betreiben eines Tachographensystems eines Fahrzeugs bekannt, bei dem im Falle eines Fahrzeugstillstands einem Fahrer für ein erstes Zeitintervall ein Fahrzeugbewegungsverbot signalisiert wird.

Die DE 103 49 434 A1 betrifft ein Verfahren zur Verbesserung einer Abstands- und Folgeregelung eines Fahrzeugs.

Die EP 0 785 533 A2 beschreibt ein Verfahren zur Lenkzeitüberwachung.

Untersuchungen haben gezeigt, dass es in der Vergangenheit häufig dann zu Lenkzeitüberschreitungen kam, wenn der Fahrzeugführer zuvor einen Stau zu durchfahren hatte. In Stausituationen werden üblicherweise die Fahrzeuge relativ häufig, aber nur um sehr kleine Strecken bewegt, was dazu führt, dass zwar dem Gefühl nach wenig Lenkzeit angefallen ist, sich aber die tatsächliche Lenkzeit in beträchtlichem Maße summiert.

Aufgabe der Erfindung ist es, ein Verfahren anzugeben, das im Rahmen bestehender gesetzlicher Vorgaben bei innerhalb eines Zeiterfassungsintervalls anfallende Lenkzeiten im Wechsel mit anderen Tätigkeiten, die Lenkzeiten so gestaltet, dass möglichst wenig Lenkzeit registriert wird. Ferner ist es Aufgabe der Erfindung, ein Verfahren zur Lenkzeitoptimierung mit einem Fahrerassistenzsystem anzugeben. Insbesondere gehört es zur Aufgabe, ein Verfahren anzugeben, das es erlaubt einen Stau lenkzeitoptimiert zu durchfahren. Darüber hinaus gehört es zur Aufgabe, eine geeignete Vorrichtung zur Durchführung eines der Verfahren anzugeben.

Gelöst wird die Aufgabe durch die Merkmale des Verfahrens gemäß Anspruch 1, durch die Merkmale des Verfahrens gemäß Anspruch 5 und durch die Merkmale der Vorrichtung gemäß Anspruch 10. Vorteilhafte Ausgestaltungen sind jeweils Gegenstand der darauf rückbezogenen Unteransprüche.

Erfindungsgemäß wird von der Überlegung ausgegangen, dass sich in den meisten Verkehrssituationen nicht der Zeitpunkt des Abbremsens eines Fahrzeugs sondern der Zeitpunkt des wieder Anfahrens des Fahrzeugs in gewissen Grenzen frei gestalten lässt, ohne den nachfolgenden Verkehr zu belasten.

Gemäß Anspruch 1 wird ein Verfahren zur Lenkzeitoptimierung bei Fahrzeugen vorgeschlagen, wobei innerhalb eines Zeiterfassungsintervalls die Lenkzeit erfasst und mit einer innerhalb des Zeiterfassungsintervalls maximal zulässigen Lenkzeit verglichen wird und wobei bei Einhalten der maximal zulässigen Lenkzeit das Zeiterfassungsintervall nicht als Lenkzeit registriert wird. Erfindungsgemäß ist vorgesehen, dass bei einem stehenden Fahrzeug innerhalb eines Zeiterfassungsintervalls die innerhalb dieses Zeiterfassungsintervalls angefallene Lenkzeit mit einer innerhalb des Zeiterfassungsintervalls maximal zulässigen Lenkzeit verglichen wird und bei einer festgestellten zulässigen Restlenkzeit ein Anfahren so lange fahrzeugseitig verzögert wird, dass nach dem wieder Anfahren das Ende der maximal zulässigen Lenkzeit mit dem Ende des Zeiterfassungsintervalls zusammenfällt, wobei Mittel vorgesehen sind, die eine Anfahrbereitschaft unter Einhaltung der maximal zulässigen Lenkzeit signalisieren. Der optimale Anfahrzeitpunkt, bzw. die Anfahrbereitschaft an sich kann zum Beispiel durch einen Signalgeber dem Fahrzeugführer signalisiert werden.

Mit diesem Verfahren wird erreicht, dass unter Inkaufnahme einer geringen Wartezeit, die zum Beispiel beim Durchfahren eines Staus ohnehin anfallen würde, also für den nachfolgenden Verkehr keine Belastung darstellt, ein Zeiterfassungsintervall nicht als Lenkzeit registriert wird, obwohl in dem Zeitintervall Lenkzeit angefallen ist. Mit der erfindungsgemäßen Lösung kann dem Fahrer somit eine zuverlässige Information darüber bereitgestellt werden, wie lange er noch fahren kann bzw. wie er die Lenkzeit optimieren kann.

In weiterer Ausgestaltung der Erfindung kann es von Vorteil sein, dass durch den Fahrzeugführer betätigbare Mittel vorgesehen sind, die ein sofortiges Anfahren innerhalb des Zeiterfassungsintervalls initiieren. In diesem Fall wird die Lenkzeit kumuliert erfasst und bei jedem erneuten Anhalten des Fahrzeugs innerhalb des Zeiterfassungsintervalls wird die innerhalb dieses Zeiterfassungsintervalls angefallene kumulierte Lenkzeit mit einer innerhalb des Zeitintervalls maximal zulässigen Lenkzeit verglichen. Beim Feststellen einer noch zulässigen Restlenkzeit wird ein Anfahren so lange fahrzeugseitig verzögert, dass nach dem wieder Anfahren das Ende der maximal zulässigen Lenkzeit mit dem Ende des Zeiterfassungsintervalls zusammenfällt.

Mit dem so erweiterten Verfahren werden dem Fahrzeugführer in vorteilhafter Weise weitere Gestaltungsmöglichkeiten eröffnet, sich den wechselnden Verkehrssituationen optimal anzupassen und dennoch das Fahrzeug lenkzeitoptimiert zu bewegen.

Wie heute bei modernen Fahrzeugen geläufig, können in vorteilhafter Weise am Fahrzeug Mittel vorgesehen sein, die das Verkehrsgeschehen vor und/ oder hinter dem Fahrzeug abtasten und die Abtastwerte mit vorgebbaren Werten vergleichen um dann, wenn die Abtastwerte die vorgegebenen Werte überschreiten, ein Signal zur sofortigen Anfahrbereitschaft an den Fahrzeugführer zu geben. Bei diesen Mitteln kann es sich zum Beispiel um Abstandssensoren und/ oder Geschwindigkeitssensoren handeln, die vorteilhaft die Möglichkeit eröffnen, automatisch auf eine Veränderung des Verkehrsgeschehens zu reagieren. So bietet sich die Möglichkeit, dann, wenn bei Stillstand des Fahrzeugs der vorausfahrende Verkehrsteilnehmer eine vorgegebene Distanz zum Fahrzeug überschreitet oder eine vorgegebene Geschwindigkeit überschreitet, dem schnelleren Fortkommen Priorität einzuräumen und unter Inkaufnahme von Lenkzeit sofort anzufahren.

Vorteilhaft sind die vorgegebenen Werte mit der Hilfe von Eingabemitteln durch den Fahrzeugführer eingebbar, so dass dieser eine Anpassung an die jeweilige Verkehrssituation oder an seinen persönlichen Fahrstil vornehmen kann.

Gemäß den Merkmalen des Anspruchs 5, der ein Verfahren zur Lenkzeitoptimierung mit einem Fahrerassistenzsystem betrifft, das so ausgebildet ist, dass es beim Durchfahren eines Staus mittels Sensoren das Fahrzeug autonom abbremst und anfährt, erfolgt die Überlagerung derart, dass der Anfahrvorgang dadurch lenkzeitoptimiert wird, dass innerhalb eines Zeiterfassungsintervalls die Lenkzeit erfasst und mit einer innerhalb des Zeiterfassungsintervalls maximal zulässigen Lenkzeit verglichen wird und wobei bei Einhalten der maximal zulässigen Lenkzeit das Zeiterfassungsintervall nicht als Lenkzeit registriert wird. Erfindungsgemäß sind am Fahrzeug Mittel vorgesehen, die das Verkehrsgeschehen vor und/ oder hinter dem Fahrzeug abtasten und die Abtastwerte mit vorgebbaren Werten vergleichen, wobei bei einem stehenden Fahrzeug innerhalb eines Zeiterfassungsintervalls die innerhalb dieses Zeiterfassungsintervalls angefallene Lenkzeit mit einer innerhalb des Zeiterfassungsintervalls maximal zulässigen Lenkzeit verglichen wird und wobei bei einer festgestellten zulässigen Restlenkzeit und falls die Abtastwerte die vorgegebenen Werte nicht überschreiten ein Anfahren so lange fahrzeugseitig verzögert wird, dass nach dem wieder Anfahren das Ende der maximal zulässigen Lenkzeit mit dem Ende des Zeiterfassungsintervalls zusammenfällt. Dabei sind Mittel vorgesehen, die eine Anfahrbereitschaft unter Einhaltung der maximal zulässigen Lenkzeit signalisieren.

Das Verfahren zur Lenkzeitoptimierung ist somit einem Fahrerassistenzsystem zuschaltbar überlagert, das so ausgebildet ist, dass es beim Durchfahren eines Staus mittels Sensoren das Fahrzeug autonom abbremst und anfährt, wobei die Überlagerung derart erfolgt, dass der Anfahrvorgang lenkzeitoptimiert wird. Derartige Fahrzeugassistenzsysteme sind zum Beispiel das eingangs beschriebene ACC Stop&Go.

Um dem Fahrzeugführer Routinetätigkeiten abzunehmen kann vorteilhaft vorgesehen sein, dass der Anfahrvorgang fahrzeugseitig autonom bzw. automatisch vorgenommen wird. Alternativ oder zusätzlich dazu kann der Anfahrvorgang auch dann vorgenommen werden, wenn der Fahrzeugführer das Signal zur Anfahrbereitschaft oder der sofortigen Anfahrbereitschaft durch eine Eingabe mittels Eingabemitteln quittiert. Das Signal an den Fahrzeugführer kann dabei ausgewählt sein unter einem akustischen, einem optischen und/ oder einem haptischen Signal.

Als Eingabemittel, sowohl für die Eingabe der vorgebbaren Werte als auch das Quittieren des Signals zum sofortigen Anfahren, kommen vorteilhaft unterschiedliche Mittel ausgewählt unter Tast- oder Drehschaltern, realen oder virtuellen Tastaturen, berührungsempfindlichen Bildschirmen, Cursor-Steuerungen oder Spracheingabesystemen in Frage.

Zur Durchführung der Verfahren wird vorteilhaft eine Vorrichtung bzw. Anordnung herangezogen, die eine erste Einrichtung zur Vorgabe eines Zeiterfassungsintervalls umfasst. Dabei kann es sich um einen Zeitgeber handeln, der bestimmte Zeitintervalle, zum Beispiel eine Minute, abgrenzt und als Zeiterfassungsintervall vorgibt. Weiter ist eine zweite Einrichtung vorgesehen, die eine maximal zulässige Lenkzeit innerhalb eines solchen Zeiterfassungsintervalls vorgibt. Hierbei handelt es sich vorteilhaft um einen Speicher, in dem die maximal zulässige Lenkzeit als Speicherwert vorgehalten wird. Der Speicherwert kann dabei durch Eingabe veränderbar sein, wenn das Fahrzeug in Regionen mit unterschiedlicher Lenkzeitregelung verwendet wird.

Als weitere Komponente ist eine Lenkzeiterfassungseinrichtung enthalten, die die Lenkzeit innerhalb eines Zeiterfassungsintervalls erfasst. Um Aufschluss über eine eventuell gegebene Restlenkzeit zu erhalten, kommt eine Vergleichseinrichtung zur Anwendung, die die erfasste Lenkzeit mit der maximal zulässigen Lenkzeit vergleicht. Zum Erreichen des optimalen Anfahrzeitpunktes ist eine Verzögerungseinrichtung zur, vorzugsweise autonomen, Verzögerung eines wieder Anfahrens nach einem Anhalten innerhalb eines solchen Zeiterfassungsintervalls vorgesehen, die das wieder Anfahren so verzögert, dass nach dem wieder Anfahren das Ende der maximal zulässigen Lenkzeit mit dem Ende des Zeiterfassungsintervalls zusammenfällt. Um den optimalen Anfahrzeitpunkt dem Fahrzeugführer zu signalisieren ist eine Signalvorrichtung zur Signalgabe vorgesehen, so dass der Fahrzeugführer nach vorheriger Kontrolle der Verkehrssituation das Anfahren initiieren kann.

In vorteilhafter Weiterbildung der erfindungsgemäßen Anordnung sind Sofortstartmittel vorgesehen, die ein durch den Fahrzeugführer ausgelöstes sofortiges Anfahren ermöglichen. Damit wird dem Fahrzeugführer die Möglichkeit gegeben, zu jedem gewünschten Zeitpunkt anzufahren, wenn dies die Verkehrssituation erfordert. Dieser Vorgang des sofortigen Anfahrens kann in Grenzen automatisiert werden, indem Sensoren vorgesehen sind, die die Verkehrssituation vor und/ oder hinter dem Fahrzeug überwachen. Hier sind insbesondere Entfernungssensoren und Geschwindigkeitssensoren vorteilhaft einsetzbar, die zum Beispiel bei Überschreiten einer voreinstellbaren Distanz oder einer voreinstellbaren Geschwindigkeit durch ein vorausfahrendes oder nachfolgendes Fahrzeug ein sofortiges Anfahren signalisieren. Die Sensoreinrichtung wirkt dabei mit der Signalvorrichtung zusammen derart, dass dann, wenn die Abtastwerte die vorgegebenen Werte überschreiten, eine Signalgabe zur sofortigen Anfahrbereitschaft erfolgt. In einem solchen Fall ist das Abwarten zum Einhalten der in einem Zeiterfassungsintervall maximal zulässigen Lenkzeit nicht sinnvoll.

Die Sensoreinrichtung kann auch dazu dienen, ein Staugeschehen zu erkennen und das Verfahren zur Lenkzeitoptimierung automatisch zuzuschalten.

Um dem Fahrzeugführer Mittel an die Hand zu geben, die Lenkzeitsituation einschätzen zu können, ist vorteilhaft eine Einrichtung vorgesehen, die dem Fahrzeugführer die in dem Zeiterfassungsintervall T verfügbare Restlenkzeit $Lt_{Rest}$ und/ oder die insgesamt notwendige Wartezeit Wt und/ oder die aufgelaufene Lenkzeit Lt und/ oder die Restwartezeit $Wt_{Rest}$ signalisiert. Es kann dies eine Einrichtung sein, die ausgewählt ist unter einer akustischen und/ oder optischen und/ oder haptischen Einrichtung.

Besonders vorteilhaft sind optische Anzeigen, die ein Zeiterfassungsintervall T grafisch darstellen, derart, dass ein erster Teilbereich die insgesamt notwendige Wartezeit Wt, ein zweiter Bereich die noch verfügbare Lenkzeit $Lt_{Rest}$ und ein dritter Bereich die bereits verstrichene Lenkzeit Lt jeweils proportional und optisch unterscheidbar darstellt. Um die aktuelle zeitliche Lage in dem Zeiterfassungsintervall T zu kennzeichnen ist ein Zeiger vorgesehen, der in Zeitinkrementen an dem Zeitintervall entlangwandert. Die Anzeige wird dabei so gesteuert, dass bei Lenkbetrieb der dritte Teilbereich, der die verstrichene Lenkzeit Lt darstellt, sich dynamisch vergrößert, der erste Teilbereich, der die insgesamt notwendige Wartezeit Wt darstellt, gleich bleibt und der zweite Teilbereich, der die noch verfügbare Restlenkzeit $Lt_{Rest}$ darstellt, sich dynamisch verkleinert. Das Zeiterfassungsintervall T wird dann für den Fahrzeugführer erkennbar nicht als Lenkzeit im Tachografen registriert, wenn der Zeiger den die Restlenkzeit $U_{Rest}$ darstellenden zweiten Teilbereich erreicht und die oben erwähnte 3-Minuten-Regel erfüllt ist.

Der dritte, der erste und der zweite Teilbereich können sich unmittelbar aneinanderreihen, es sind aber auch andere Aufteilungen denkbar. So kann vorgesehen sein, dass der erste und der dritte Teilbereich in Teilen dargestellt sind, die sich entsprechend ihrem zeitlichen Anfallen bei Lenkzeiten und Wartezeiten entlang des Zeiterfassungsintervalls verteilen und dass der zweite die Restlenkzeit $Lt_{Rest}$ darstellende Teilbereich vom Ende des Zeiterfassungsintervalls T sich rückwärts erstreckend dargestellt ist und sich entsprechend der innerhalb des Zeiterfassungsintervalls angefallenen Lenkzeit Lt dynamisch verkleinert. Auch in diesem Fall wird das Zeiterfassungsintervall T dann für den Fahrzeugführer erkennbar nicht als Lenkzeit im Tachografen registriert, wenn der Zeiger den die Restlenkzeit $U_{Rest}$ darstellenden dritten Bereich erreicht und die 3-Minuten-Regel erfüllt ist.

Anstelle oder ergänzend zu der vorstehend beschriebenen optischen Anzeige kann natürlich auch eine akustische Signalgabe erfolgen, eine Sprachausgabe ist in diesem Zusammenhang besonders vorteilhaft. Auch eine haptische Signalgabe ist denkbar, zum Beispiel indem das Lenkrad und/ oder der Fahrersitz vibriert, wenn unter Einhaltung der maximalen Lenkzeit in einem Zeiterfassungsintervall angefahren werden kann.

Das vorstehend beschriebene Verfahren, sowie die beschriebene Anordnung lassen sich vorteilhaft allgemein in Fahrzeugen, insbesondere auch in Nutzfahrzeugen einsetzen.

Weitere Ausgestaltungen und Vorteile der Erfindung werden nachfolgend anhand der Zeichnungen näher erläutert. Es zeigen:

Fig. 1    Eine Prinzipdarstellung des Verfahrens zur Lenkzeitoptimierung in Form eines Flussdiagramms

Fig. 2    Eine Prinzipdarstellung einer Anordnung zur Durchführung des Verfahrens

Fig. 3    Eine Prinzipdarstellung einer Fahrerinformationsanzeige

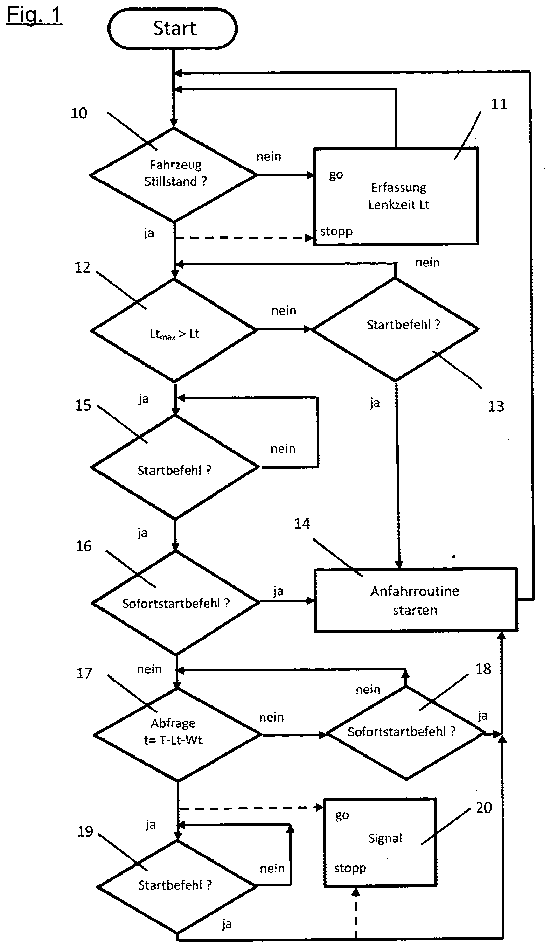

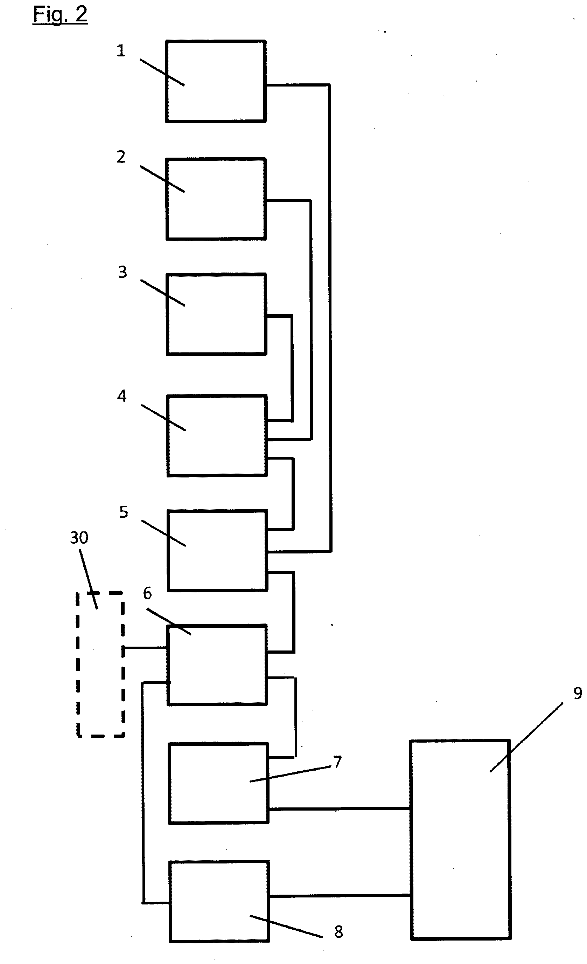

Bei der nachfolgenden beispielhaften und vereinfachten Darstellung eines Verfahrens zur Lenkzeitoptimierung wie es in Fig. 1 als Flussdiagramm gezeigt ist, wird davon ausgegangen, dass gemäß der Prinzipdarstellung in Fig. 2 eine erste Einrichtung 1 zur Vorgabe eines Zeiterfassungsintervalls T vorhanden ist. Darunter soll eine Einrichtung verstanden werden, die einerseits ein Zeiterfassungsintervall T vorgibt, zum Beispiel 60 Sekunden und andererseits dieses Zeitinterfall in Zeitinkrementen durchläuft, zum Beispiel in Sekundenschritten. Es kann sich dabei beispielsweise um einen abfragbaren Countdown-Timer handeln, der ausgehend vom einem die Länge des Zeiterfassungsintervall T repräsentierenden Maximalwert, zum Beispiel 60 in Zeitinkrementen von je "Eins" auf bis "Null" herunterzählt. Weiter ist unterstellt, dass eine Lenkzeiterfassungseinrichtung 3 vorhanden ist, die die Lenkzeit Lt während eines Zeiterfassungsintervalls T in Zeitinkrementen, zum Beispiel in Sekunden, erfasst.

Zur Vorgabe einer maximal zulässigen Lenkzeit $Lt_{max}$ innerhalb eines Zeitintervalls T ist eine zweite Einrichtung 2 vorgesehen, zum Beispiel ein abrufbarer Speicher, von dem die dort vorgehaltene maximal zulässige Lenkzeit $Lt_{max}$ einer ebenfalls vorhandenen Vergleichseinrichtung 4 übergeben und mit der aufgelaufenen Lenkzeit Lt aus der Lenkzeiterfassungseinrichtung 3 verglichen wird. Die Lenkzeiterfassungseinrichtung 3 ist zum Beispiel als abfragbarer Timer ausgebildet, der die Lenkzeit Lt in Zeitinkrementen, zum Beispiel Sekunden hochzählt und den Zählerwert der Vergleichseinrichtung 4 übergibt. Notwendigerweise ist die Lenkzeiterfassungseinrichtung 3 mit einer hier nicht dargestellten Fahrzeugkomponente verbunden, die eine Information darüber liefert, ob sich das Fahrzeug in Bewegung oder im Stillstand befindet. Befindet sich das Fahrzeug in Bewegung werden die Zeitinkremente hochgezählt, befindet sich das Fahrzeug im Stillstand, stoppt der Zähler.

Um den Start des Fahrzeugs so zu verzögern, dass die maximal zulässige Lenkzeit eingehalten wird, ist es notwendig eine Verzögerungseinrichtung 5 vorzusehen, die den Anfahrzeitpunkt bestimmt. Es kann sich dabei um eine Rechen- und Vergleichseinrichtung handeln, die einerseits den Startzeitpunkt St berechnet, der innerhalb des Zeiterfassungsintervalls T eingehalten werden muss, um die maximal zulässige Lenkzeit $Lt_{max}$

einzuhalten und die andererseits überwacht, ob dieser Startzeitpunkt St erreicht ist. Der Startzeitpunkt St wird dabei berechnet aus

$$St = T - Lt - Wt$$

wobei Wt die innerhalb eines Zeiterfassungsintervalls insgesamt notwendige Wartezeit ist, die eingehalten werden muss um die maximale Lenkzeit nicht zu überschreiten. Die Wartezeit Wt kann dabei in einem Speicher vorgegeben sein oder berechnet werden

$$Wt = T - Lt_{max}$$

Weiter ist vorausgesetzt, dass eine Signalvorrichtung 6 vorgesehen ist, die das Erreichen des Startzeitpunktes St signalisiert, Startmittel 7 über die ein Startbefehl durch den Fahrzeugführer eingebbar ist und Sofortstartmittel 8, über die ein Sofortstartbefehl durch den Fahrzeugführer auslösbar ist. Darüber hinaus ist vorausgesetzt, dass eine Anfahrroutine 9 vorgesehen ist, die nach Auslösen eines Startbefehls bzw. Sofortstartbefehls durch den Fahrzeugführer einen automatischen Anfahrvorgang durchführt. Derartige Anfahrroutinen sind im Fahrzeugbereich, insbesondere Nutzfahrzeugbereich, zum Beispiel in Verbindung mit ACC oder ACC Stop&Go Fahrerassistenzsystemen hinreichend bekannt und in Gebrauch, so dass sich eine nähere Beschreibung erübrigt.

In Erweiterung der vorstehend beschriebenen Einrichtung kann die Signalvorrichtung 6 mit einer Sensoreinrichtung 30 (in Fig. 2 gestrichelt dargestellt) verbunden sein, die bei Anliegen eines Signals von der Sensoreinrichtung einen Sofortstart signalisiert. Es bedarf dann nur noch der Quittierung durch den Fahrzeugführer mittels entsprechender Eingabemittel (nicht dargestellt), um den Anfahrvorgang auszulösen. Alternativ kann dies aber auch fahrzeugseitig autonom bzw. automatisch erfolgen. Auch die vorstehend angesprochene Sensoreinrichtung 30 ist zum Beispiel in Verbindung mit ACC oder ACC Stop&Go Fahrerassistenzsystemen hinreichend bekannt und in Gebrauch, so dass sich auch hier eine nähere Beschreibung erübrigt. Es ist lediglich zu erwähnen, dass derartige Sensoreinrichtungen 30 üblicherweise eine eigene Steuereinheit besitzen die die Sensordaten weitgehend aufbereitet. Eine solche Sensoreinrichtung 30 kann für den hier beschriebenen Zweck so ausgebildet sein, dass sie bei Überschreiten bzw. Unterschreiten einer vorgewählten Distanz durch das vorausfahrende bzw. nachfolgende Fahrzeug oder bei Überschreiten einer vorgewählten Geschwindigkeit durch das vorausfahrende und/ oder nachfolgende Fahrzeug ein Signal abgibt, das von der Signalvorrichtung 6 verarbeitbar ist.

Die vorstehend beschriebenen Einrichtungen müssen nicht zwangsläufig Hardware-Komponenten sein, es ist vielmehr üblich, zum Beispiel Zähler, Vergleicher, als Softwareroutine auszubilden, bzw. Berechnungen mit auf einem Steuergerät implementierten Softwareroutinen durchzuführen. Die vorstehend anhand ihrer Funktion beschriebenen Einrichtungen zur Durchführung des Verfahrens sind daher bevorzugt als Softwareroutinen realisiert, die auf einem programmgestützten elektronischen Steuersystem, das bei heute üblichen Fahrzeugen ohnehin zum Einsatz kommt, implementiert sind. Die in der Fig. 2 dargestellten Verbindungslinien zwischen den einzelnen Funktionsblöcken sind daher ganz allgemein als Wirkverbindungen zu verstehen, über die ein Datenaustausch erfolgt.

Die angesprochene Signalvorrichtung kann so ausgebildet sein, dass sie optisch, akustisch oder haptisch wahrnehmbare Signale einzeln oder in beliebiger Kombination abgibt. Für die Startmittel bzw. Sofortstartmittel bzw. die Quittierung von Signalen kommen alle Formen der Eingabe wie Tast- oder Drehschaltern, realen oder virtuellen Tastaturen, berührungsempfindlichen Bildschirmen, Cursor-Steuerungen oder Spracheingabesysteme in Frage. Was die Startmittel bzw. Sofortstartmittel angeht, so bietet sich natürlich das Gaspedal als Eingabemittel an zum Beispiel in der Weise, dass ein einmaliges Durchtreten des Gaspedals als Startsignal und ein zweimaliges Durchtreten des Gaspedals als Sofortstartsignal gewertet wird.

Im Hinblick auf den in Fig. 1 in Form eines Flussdiagramms gezeigten und nachfolgend näher beschriebenen Steuerungsablaufes zur Durchführung des Verfahrens ist weiter vorausgesetzt, dass die Erfassungseinrichtung 1 zur Erfassung des Zeiterfassungsintervalls T den Steuerungsablauf mit Beginn jedes neuen Zeiterfassungsintervalls T neu startet und dass mit dem Ende jedes Zeiterfassungsintervalls T der Steuerungsablauf endet, unabhängig in welchem Status der Ausführung sich dieser befindet. Mit dem Ende wird die Lenkzeit Lt auf Null gesetzt, die Startzeit St auf T minus Wt und ein eventuell anliegendes Signal der Signalvorrichtung 6 wird gelöscht. Mit anderen Worten, das in Fig. 1 dargestellte Verfahren beginnt mit jedem neuen Zeiterfassungsintervall T neu.

Nachfolgend sollen nun die einzelnen Steuerschritte des Verfahrens näher beschrieben werden. Zunächst erfolgt mit dem Start des Verfahrens im ersten Schritt 10 eine Abfrage, ob sich das Fahrzeug im Stillstand befindet. Wie oben beschrieben, wird hierzu eine Fahrzeugkomponente abgefragt, die eine Information liefert, ob das Fahrzeug im Stillstand oder in Bewegung ist. Dies kann zum Beispiel die Tachoeinrichtung sein. Befindet sich das Fahrzeug nicht im Stillstand, wird die Lenkzeiterfassung 11 gestartet und an den Anfang der Steuerroutine vor Schritt 10 zurückgesprungen. Trifft die Abfrage 10 zu, befindet sich das Fahrzeug also im Stillstand, wird einerseits die Lenkzeiterfassung 11 nicht in Gang gesetzt oder gestoppt und andererseits in einer zweiten Abfrage 12 abgefragt, ob die Maximale Lenkzeit $Lt_{max}$ größer ist, als die erfasste Lenkzeit Lt. Ist dies nicht der Fall, erfolgt eine dritte Abfrage 13, ob ein Startbefehl vorliegt. Diese Abfrage, ob ein Startbefehl vorliegt, geschieht stets durch Abfrage der Startmittel 7 (Fig. 2), so dass dies nachfolgend nicht mehr eigens erwähnt wird. Liegt ein Startbefehl vor, startet einerseits die Anfahrroutine 14 und andererseits wird an den Anfang des Steuerungsablaufs vor die erste Abfrage 10 zurückgesprungen. Trifft die dritte Abfrage 13 nicht zu, liegt also kein Startbefehl vor, wird in den Steuerungsablauf vor die zweiten Abfrage 12 zurückgesprungen.

Triff die zweite Abfrage 12 zu, ist also $Lt_{max} > Lt$, wird in einer vierten Abfrage 15 abgefragt, ob ein Startbefehl vorliegt. Ist dies nicht der Fall, wird die vierte Abfrage 15 wiederholt. Liegt in der vierten Abfrage 15 ein Startbefehl vor, wird in einer fünften Abfrage 16 abgefragt, ob ein Sofortstartbefehl vorliegt. Dies wird stets durch Abfrage der Sofortstartmittel 8 (Fig. 2) bewerkstelligt, so dass dies nachfolgend nicht mehr eigens erwähnt wird. Ist dies der Fall, liegt also ein Sofortstartbefehl vor, wird einerseits die Anfahrroutine 14 gestartet und andererseits an den Anfang der Steuerroutine vor Schritt 10 zurückgesprungen. Trifft die fünfte Abfrage 16 nicht zu, liegt also kein Sofortstartbefehl vor, wird in einer sechsten Abfrage 17 überprüft, ob die Zeit t aus der Einrichtung 1 zur Vorgabe eines Zeiterfassungsintervalls T (Fig. 2), die bis zum Ende des aktuellen Zeiterfassungsintervalls T verbleibt (Countdown-Timer), mit dem Startzeitpunkt St zum Anfahren (ohne Überschreiten der maximal zulässigen Lenkzeit $Lt_{max}$) übereinstimmt. Ist dies nicht der Fall, wird in einer siebten Abfrage 18 abgefragt, ob ein Sofortstartbefehl vorliegt. Ist dies nicht der Fall, wird in die Steuerroutine vor der sechsten Abfrage 17 zurückgesprungen. Ist dies der Fall, liegt also bei der siebten Abfrage 18 ein Sofortstartbefehl vor, wird einerseits die Anfahrroutine 14 gestartet und andererseits an den Anfang der Steuerroutine vor Schritt 10 zurückgesprungen.

Trifft die sechste Abfrage 17 zu, ist also t = St wird in einer achten Abfrage 19 abgefragt, ob ein Startbefehl vorliegt. Ist dies nicht der Fall, wird einerseits eine Signalausgabe 20 über die Signalvorrichtung 6 (Fig. 2) ausgegeben und andererseits die achte Abfrage 19 wiederholt. Trifft die achte Abfrage 19 zu, liegt also ein Startbefehl an, wird die Signalausgabe 20 gestoppt, die Anfahrroutine 14 gestartet und an den Anfang der Steuerroutine vor Schritt 10 zurückgesprungen.

Der vorstehend beschriebene Verfahrensablauf besitzt selbstverständlich nur Beispielcharakter, dem Fachmann ist es hinlänglich bekannt, bei Verfahrensabläufen Verfahrensschritte in ihrer Reihenfolge zu tauschen, ohne dass das Verfahren insgesamt verändert wird.

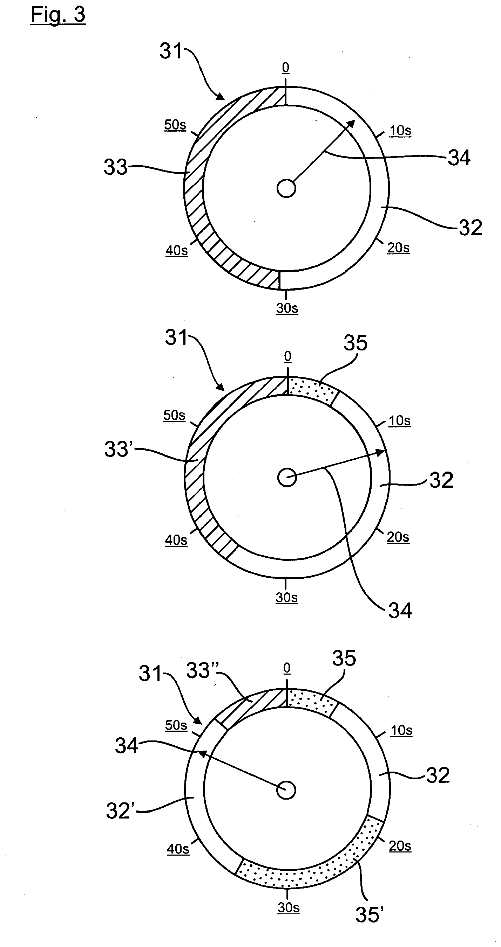

Um dem Fahrzeugführer eine Information über die augenblickliche Lenkzeitsituation innerhalb des Zeiterfassungsintervalls zu geben, ist es sinnvoll eine entsprechende Informationseinrichtung vorzusehen. Ein Beispiel für eine solche Informationseinrichtung ist in Fig. 3 gezeigt. Dort sind in drei Einzeldarstellungen graphische Anzeigen in Uhrenform dargestellt. Dabei muss es sich selbstverständlich nicht um körperlich vorhandene Skalen und Zeiger handeln, es ist vielmehr zweckmäßig eine virtuelle Abbildung der Informationseinrichtung auf einer Anzeige zum Beispiel auf einem Bildschirm darzustellen. Die nachfolgenden Ausführungen sind deshalb so zu verstehen, dass jede Art der Darstellung, gleich ob real oder virtuell, in Frage kommt. Für das Beispiel ist angenommen, dass ein Zeiterfassungsintervall T 60 Sekunden umfasst und veränderliche Bereiche der Anzeige sich gegebenenfalls im Sekundentakt verändern.

Die erste Einzeldarstellung in Fig. 3 oben zeigt die für die Information des Fahrzeugführers notwendigen Elemente. Dies sind ein Kreisring 31 in Form eines Ziffernblattes, der einerseits in einen ersten Teil 32 und einen zweiten Teil 33 aufgeteilt ist, die sich farblich unterscheiden und andererseits in sechs gleiche Teilbereiche zu je zehn Sekunden, also sechzig Sekunden auf dem Umfang. Wie bereits ausgeführt, symbolisiert der Kreisring 31 das Zeiterfassungsintervall T, der erste Teil 32 des Kreisring 31 steht für die in einem Zeiterfassungsintervall insgesamt notwendige Wartezeit Wt in der sich das Fahrzeug im Stillstand befinden muss um die innerhalb des Zeitintervalls maximal zulässige Lenkzeit $Lt_{max}$ einzuhalten. Der zweite Teil 33 des Kreisrings 31 symbolisiert die maximal (noch) in einem Zeiterfassungsintervall zulässige Restlenkzeit $Lt_{Rest}$. Als weiteres Element umfasst die Anzeige einen konzentrisch zu dem Kreisring 31 angeordneten Zeiger 34, der sich als Zeitindikator von der Position 0s aus in 1s Zeitinkrementen um den Kreisring 31 bewegt.

Wie die Darstellung der bereits absolvierten Lenkzeit Lt und der restlichen innerhalb des Zeiterfassungsintervalls verbleibenden Restlenkzeit $Lt_{Rest}$ erfolgt, zeigt in einem ersten Beispiel die mittlere Einzeldarstellung in Fig. 3. Dort ist beginnend mit dem Start des Zeiterfassungsintervalls T bei 0s Lenkzeit Lt angefallen, die durch einen dritten Teilbereich 35 auf dem Kreisring 31 kenntlich gemacht ist. Der dem dritten Teilbereich 35, also der Lenkzeit Lt, folgende erste Teilbereich 32, also die insgesamt notwendige Wartezeit Wt, verändert sich nicht. Der erste Teilbereich 32 wird also gewissermaßen vor den dritten Teilbereich 35 hergeschoben, wodurch sich der zweite Teilbereich 33', der die maximal in dem Zeiterfassungsintervall T noch zulässige Restlenkzeit $Lt_{Rest}$ symbolisiert, in dem gleichen Maße verkleinert, in dem sich der dritte Teilbereich 35 vergrößert. Fällt nach einem Stopp innerhalb des Zeiterfassungsintervalls T weitere Lenkzeit an, vergrößert sich der dritte Teilbereich 35 weiter und der zweite Teilbereich 33' wird entsprechend kleiner. Die zeitliche Lage innerhalb des Zeiterfassungsintervalls T wird, wie bereits ausgeführt, durch den Zeiger 34 angezeigt, so dass der Fahrzeugführer anhand der Lage des Zeigers 34 erkennen kann, ob die insgesamt notwendige Wartezeit Wt innerhalb des Zeiterfassungsintervalls T bereits verstrichen ist. So lange sich der Zeiger 34 in dem ersten Teilbereich 32 befindet, ist die innerhalb eines Zeiterfassungsintervalls T insgesamt notwendige Wartezeit Wt noch nicht verstrichen, befindet sich der Zeiger 34 hingegen in dem zweiten Teilbereich 33' ist die insgesamt notwendige Wartezeit Wt verstrichen und es besteht die Möglichkeit anzufahren ohne dass das Zeiterfassungsintervall als Lenkzeit im Tachografen registriert wird, vorausgesetzt, die oben erwähnte 3-Minuten-Regel ist erfüllt.

Eine weitere Möglichkeit, die bereits absolvierten Lenkzeiten Lt und die restlichen innerhalb des Zeiterfassungsintervalls maximal noch verbleibende Restlenkzeit $Lt_{Rest}$ für den Fahrzeugführer leicht erkennbar darzustellen, zeigt in einem zweiten Beispiel die untere Einzeldarstellung in Fig. 3. Hier wird auf dem Kreisring 31 die Lenkzeit Lt in mehreren dritten Teilbereichen 35, 35' dargestellt, die sich je nach ihrem zeitlichen Anfallen auf dem Kreisring 31 anordnen. Im Beispiel sind dies zwei Lenkzeiten, die mit den Bezugszeichen 35 und 35' bezeichnet sind. Das hat zur Folge, dass auch die insgesamt notwendige Wartezeit Wt, die sich in ihrer zeitlichen Länge nicht verändert, in mehreren ersten Teilbereichen 32, 32' je nach ihrem zeitlichen Anfallen über den Kreisring 31 verteilt dargestellt wird. Die innerhalb eines Zeiterfassungsintervalls T insgesamt notwendige Wartezeit Wt ist auch nach diesem Beispiel dann abgelaufen, wenn der Zeiger 34 den zweiten Teilbereich 33", der die noch zulässige Restlenkzeit $Lt_{Rest}$ symbolisiert, erreicht. Befindet er sich hingegen, wie in der Darstellung, im mit dem Bezugszeichen 32' bezeichneten zweiten Teil des ersten Teilbereichs 32, 32', ist die insgesamt notwendige Wartezeit Wt noch nicht abgelaufen. Ein Anfahren zu diesem Zeitpunkt hätte also zur Folge, dass dann, wenn die durch den zweiten Teilbereich 33" symbolisierte Restlenkzeit $Lt_{Rest}$ zu Null wird, die Anzeige des zweiten Teilbereichs 33" also verschwindet, das Zeiterfassungsintervall T als Lenkzeit im Tachografen registriert wird. Erfolgt hingegen ein erneuter Stopp und unterbleibt ein wieder Anfahren bis der Zeiger 34 den zweiten Teilbereichs 33" erreicht, wird das Zeiterfassungsintervall T nicht als Lenkzeit im Tachografen registriert.

Wie vorstehend anhand der Beispiele nach Fig. 3 gezeigt, lässt sich mit einer entsprechenden graphischen Darstellung eine einfach abzulesende und übersichtliche Information über die in einem Zeiterfassungsintervall T gegebene Situation hinsichtlich der angefallenen Lenkzeit Lt, der insgesamt notwendigen Wartezeit Wt der Restlenkzeit $Lt_{Rest}$, der Restwartezeit $Wt_{Rest}$ und der augenblicklichen zeitlichen Lage in dem Zeiterfassungsintervall T realisieren.

Abweichend zum gezeigten Beispiel nach Fig. 3 ist eine ähnlich übersichtliche Darstellung möglich, wenn die Darstellung des Zeiterfassungsintervalls T nicht in Form eines Kreises sondern gewissermaßen abgewickelt als lineares Band erfolgt. Die Darstellung der einzelnen Teilbereiche würde analog entlang dieses Bandes erfolgen und der Zeiger würde in Zeitinkrementen von zum Beispiel einer Sekunde an diesem Band entlang wandern. Selbstverständlich ist eine solche Darstellung von der Erfindung mit umfasst. Das Gleiche gilt für eine Anzeige mittels einer Ampel, bei der zum Beispiel die einzelnen Teilbereiche durch einzelne Leuchten mit unterschiedlichen Leuchtfarben angezeigt werden.

In Ergänzung oder an Stelle der vorstehend beschriebenen graphischen Darstellung kann eine akustische Ausgabe vorgesehen sein, die zum Beispiel die Restwartezeit durch Sprachausgabe ansagt oder zumindest einen Teil der Restwartezeit in Form eines Countdown herunterzählt. Auch eine haptische Signalgabe in Form einer durch den Fahrzeugführer wahrnehmbaren Vibration ist denkbar.

Wie bereits erwähnt kommen in modernen Fahrzeugen heute häufig sogenannte Fahrerassistenzsysteme wie das ACC Stop&Go zum Einsatz. Es bietet sich daher an, nicht nur die Sensoreinrichtungen eines solchen Systems mit zu nutzen, es ist vielmehr besonders effektiv, das Verfahren zur Lenkzeitoptimierung einem Fahrerassistenzsystem ACC Stop&Go zuschaltbar zu überlagern. Ein solches überlagertes System ist so ausgebildet, dass es beim Durchfahren eines Staus mittels Sensoren das Fahrzeug autonom abbremst und anfährt, wobei die Überlagerung derart erfolgt, dass der Anfahrvorgang lenkzeitoptimiert verzögert wird. Alle in Verbindung mit dem erfindungsgemäßen Verfahren zur Lenkzeitoptimierung beschriebenen Sofortstartmöglichkeiten sind natürlich auch in diesem Fall vorgesehen. Insgesamt gesehen ermöglicht die vorliegende Erfindung somit durch diese Optimierung der Lenkzeit einen Fahrzeugbetrieb mit erhöhten Lenkzeiten, wobei dem Fahrer jederzeit Rückmeldung gegeben werden kann, wie lange er noch fahren kann.

## Patentansprüche

1. Verfahren zur Lenkzeitoptimierung bei Fahrzeugen, wobei innerhalb eines Zeiterfassungsintervalls die Lenkzeit erfasst und mit einer innerhalb des Zeiterfassungsintervalls maximal zulässigen Lenkzeit verglichen wird und wobei bei Einhalten der maximal zulässigen Lenkzeit das Zeiterfassungsintervall nicht als Lenkzeit registriert wird, **dadurch gekennzeichnet, dass** bei einem stehenden Fahrzeug innerhalb eines Zeiterfassungsintervalls die innerhalb dieses Zeiterfassungsintervalls angefallene Lenkzeit mit einer innerhalb des Zeiterfassungsintervalls maximal zulässigen Lenkzeit verglichen wird und dass bei einer festgestellten zulässigen Restlenkzeit ein Anfahren so lange fahrzeugseitig verzögert wird, dass nach dem wieder Anfahren das Ende der maximal zulässigen Lenkzeit mit dem Ende des Zeiterfassungsintervalls zusammenfällt, und dass Mittel vorgesehen sind, die eine Anfahrbereitschaft unter Einhaltung der maximal zulässigen Lenkzeit signalisieren.

2. Verfahren nach Anspruch 1, **dadurch gekenn-**

**zeichnet, dass** durch den Fahrzeugführer betätigbare Mittel vorgesehen sind, die ein sofortiges Anfahren innerhalb des Zeiterfassungsintervalls initiieren, dass die Lenkzeit kumuliert erfasst wird und dass bei jedem erneuten Anhalten des Fahrzeugs innerhalb des Zeiterfassungsintervalls die innerhalb dieses Zeiterfassungsintervalls angefallene kumulierte Lenkzeit mit einer innerhalb des Zeitintervalls maximal zulässigen Lenkzeit verglichen wird und dass bei einer festgestellten zulässigen Restlenkzeit ein Anfahren so lange fahrzeugseitig, insbesondere autonom, verzögert wird, dass nach dem wieder Anfahren das Ende der maximal zulässigen Lenkzeit mit dem Ende des Zeiterfassungsintervalls zusammenfällt.

3. Verfahren nach Anspruch 1 oder 2, **dadurch gekennzeichnet, dass** am Fahrzeug Mittel vorgesehen sind, die das Verkehrsgeschehen vor und/ oder hinter dem Fahrzeug abtasten und die Abtastwerte mit vorgebbaren Werten vergleichen und die dann, wenn die Abtastwerte die vorgegebenen Werte überschreiten, ein Signal zur sofortigen Anfahrbereitschaft an den Fahrzeugführer geben.

4. Verfahren nach einem der Ansprüche 1 bis 3, **dadurch gekennzeichnet, dass** der Anfahrvorgang vorgenommen wird, wenn der Fahrzeugführer das Signal zur Anfahrbereitschaft oder sofortigen Anfahrbereitschaft durch eine Eingabe mittels Eingabemitteln quittiert.

5. Verfahren zur Lenkzeitoptimierung mit einem Fahrerassistenzsystem, das so ausgebildet ist, dass es beim Durchfahren eines Staus mittels Sensoren das Fahrzeug autonom abbremst und anfährt, wobei innerhalb eines Zeiterfassungsintervalls die Lenkzeit erfasst und mit einer innerhalb des Zeiterfassungsintervalls maximal zulässigen Lenkzeit verglichen wird und wobei bei Einhalten der maximal zulässigen Lenkzeit das Zeiterfassungsintervall nicht als Lenkzeit registriert wird, wobei am Fahrzeug Mittel vorgesehen sind, die das Verkehrsgeschehen vor und/ oder hinter dem Fahrzeug abtasten und die Abtastwerte mit vorgebbaren Werten vergleichen, wobei der Anfahrvorgang dadurch lenkzeitoptimiert wird, dass bei einem stehenden Fahrzeug innerhalb eines Zeiterfassungsintervalls die innerhalb dieses Zeiterfassungsintervalls angefallene Lenkzeit mit einer innerhalb des Zeiterfassungsintervalls maximal zulässigen Lenkzeit verglichen wird und dass bei einer festgestellten zulässigen Restlenkzeit und falls die Abtastwerte die vorgegebenen Werte nicht überschreiten ein Anfahren so lange fahrzeugseitig verzögert wird, dass nach dem wieder Anfahren das Ende der maximal zulässigen Lenkzeit mit dem Ende des Zeiterfassungsintervalls zusammenfällt, und dass Mittel vorgesehen sind, die eine Anfahrbereitschaft unter Einhaltung der maximal zulässigen Lenkzeit signalisieren.

6. Verfahren nach Anspruch 3 oder Anspruch 5, **dadurch gekennzeichnet, dass** es sich bei den Mitteln um Abstandssensoren und/ oder Geschwindigkeitssensoren handelt.

7. Verfahren nach einem der Ansprüche 3 bis 6, **dadurch gekennzeichnet, dass** die vorgebbaren Werte mittels Eingabemittel durch den Fahrzeugführer eingebbar sind.

8. Verfahren nach einem der vorhergehenden Ansprüche, **dadurch gekennzeichnet, dass** das Signal zur Anfahrbereitschaft ausgewählt ist unter einem akustischen, einem optischen und/ oder einem haptischen Signal.

9. Verfahren nach Anspruch 7 oder 8, **dadurch gekennzeichnet, dass** die Eingabemittel ausgewählt sind unter Tast- oder Drehschaltern, realen oder virtuellen Tastaturen, berührungsempfindlichen Bildschirmen, Cursor-Steuerungen oder Spracheingabesystemen.

10. Vorrichtung zur Durchführung eines Verfahrens nach einem der Ansprüche 1 bis 9, wobei die Vorrichtung wenigstens aus folgenden Teilen besteht:

   - eine erste Einrichtung (1) zur Vorgabe eines Zeiterfassungsintervalls,
   - eine zweite Einrichtung (2) zur Vorgabe einer maximal zulässigen Lenkzeit innerhalb eines solchen Zeiterfassungsintervalls,
   - eine Lenkzeiterfassungseinrichtung (3) die die Lenkzeit innerhalb eines solchen Zeiterfassungsintervalls erfasst,
   - eine Vergleichseinrichtung (4), die die erfasste Lenkzeit mit der maximal zulässigen Lenkzeit vergleicht,
   - eine Verzögerungseinrichtung (5), die derart ausgebildet ist, um bei einer festgestellten zulässigen Restlenkzeit innerhalb eines solchen Zeiterfassungsintervalls ein wieder Anfahren nach einem Anhalten automatisch zu verzögern, derart, dass nach dem wieder Anfahren das Ende der maximal zulässigen Lenkzeit mit dem Ende des Zeiterfassungsintervalls zusammenfällt und
   - eine Signalvorrichtung (6) zur Signalausgabe wenn ein Anfahren unter Einhaltung der maximalen Lenkzeit möglich ist.

11. Vorrichtung nach Anspruch 10, **dadurch gekennzeichnet, dass** Sofortstartmittel (8) vorgesehen sind, die ein durch den Fahrzeugführer ausgelöstes sofortiges Anfahren ermöglichen.

**12.** Vorrichtung nach Anspruch 10 oder 11, **dadurch gekennzeichnet, dass** eine Sensoreinrichtung (30) vorgesehen ist, die das Verkehrsgeschehen vor und/ oder hinter dem Fahrzeug abtasten und die Abtastwerte mit vorgebbaren Werten vergleichen und die mit der Signalvorrichtung (6) zusammenwirkt derart, dass dann, wenn die Abtastwerte die vorgegebenen Werte überschreiten, eine Signalgabe zur sofortigen Anfahrbereitschaft erfolgt, wobei bevorzugt vorgesehen ist, dass die Sensoreinrichtung (30) wenigstens einen Abstandssensor und/ oder wenigstens einen Geschwindigkeitssensor enthält.

**13.** Vorrichtung nach einem der Ansprüche 10 bis 12, **dadurch gekennzeichnet, dass** die Signalvorrichtung (6) ausgewählt ist unter einer akustischen und/ oder optischen und/ oder haptischen Einrichtung.

**14.** Vorrichtung nach einem der Ansprüche 10 bis 13, **dadurch gekennzeichnet, dass** eine Informationseinrichtung vorgesehen ist, die dem Fahrzeugführer die in dem Zeiterfassungsintervall T verfügbare Restlenkzeit $Lt_{Rest}$ und/ oder die insgesamt notwendige Wartezeit Wt und/ oder die aufgelaufene Lenkzeit Lt und/ oder die Restwartezeit $Wt_{Rest}$ signalisiert.

**15.** Vorrichtung nach Anspruch 14, **dadurch gekennzeichnet, dass** es sich bei der Informationseinrichtung um eine optische Anzeige handelt, die ein Zeiterfassungsintervall T grafisch darstellt, derart, dass in einem ersten Teilbereich (32) die insgesamt notwendige Wartezeit Wt, in einem zweiten Teilbereich (33) die noch verfügbare Restlenkzeit $Lt_{Rest}$ und in einem dritten Teilbereich (35) die bereits verstrichene Lenkzeit Lt jeweils proportional und optisch unterscheidbar darstellt ist und ein Zeiger (34) vorgesehen ist, der in Zeitinkrementen an dem Zeiterfassungsintervall T entlangwandert und wobei beim Lenkbetrieb der dritte Teilbereich (35), der die verstrichene Lenkzeit Lt darstellt, sich dynamisch vergrößert, der erste Teilbereich (32), der die insgesamt notwendige Wartezeit Wt darstellt, gleich bleibt und der zweite Teilbereich (33), der die noch verfügbare Restlenkzeitzeit $Lt_{Rest}$ darstellt, sich dynamisch verkleinert.

**16.** Vorrichtung nach Anspruch 15, **dadurch gekennzeichnet, dass** sich der dritte Teilbereich (35), der erste Teilbereich (32) und der zweite Teilbereich (33') unmittelbar aneinanderreihen.

**17.** Vorrichtung nach Anspruch 15 oder 16, **dadurch gekennzeichnet, dass** der erste Teilbereich (32, 32') und der dritte Teilbereich (35, 35') entsprechend ihrem Anfallen bei Lenkzeiten und Wartezeiten entlang des Zeiterfassungsintervalls T verteilt dargestellt sind und dass der zweite die Restlenkzeit $Lt_{Rest}$ darstellende Teilbereich (33") vom Ende des Zeiterfassungsintervalls T sich rückwärts erstreckend dargestellt ist und sich entsprechend der innerhalb des Zeiterfassungsintervalls T angefallenen Lenkzeit Lt dynamisch verkleinert.

**18.** Vorrichtung nach einem der Ansprüche 14 bis 17, **dadurch gekennzeichnet, dass** es sich bei der Informationseinrichtung um eine Sprachausgabe handelt.

**19.** Fahrzeug, insbesondere Nutzfahrzeug, das eine Vorrichtung gemäß einem der Ansprüche 10 bis 18 umfasst.

**Claims**

**1.** Method for optimizing driving times for vehicles, wherein the driving time is recorded within a temporal recording interval and is compared with a maximum driving time permissible within the temporal recording interval, and wherein, when the maximum permissible driving time is complied with, the temporal recording interval is not registered as driving time, **characterized in that**, in the case of a stationary vehicle within a temporal recording interval, the driving time accrued within this temporal recording interval is compared with a maximum driving time permissible within the temporal recording interval, and **in that**, in the case of an identified permissible remaining driving time, driving off is delayed by the vehicle until the end of the maximum permissible driving time coincides with the end of the temporal recording interval following the renewed driving off, and **in that** provision is made for means that signal readiness to drive off while complying with the maximum permissible driving time.

**2.** Method according to Claim 1, **characterized in that** provision is made for means, able to be actuated by the vehicle driver, which initiate immediate driving off within the temporal recording interval, **in that** the total driving time is recorded and **in that**, upon each renewed stoppage of the vehicle within the temporal recording interval, the total driving time accrued within this temporal recording interval is compared with a maximum driving time permissible within the time interval, and **in that**, in the case of an identified permissible remaining driving time, driving off is delayed by the vehicle, in particular autonomously, until the end of the maximum permissible driving time coincides with the end of the temporal recording interval following the renewed driving off.

**3.** Method according to Claim 1 or 2, **characterized in that** provision is made on the vehicle for means that sample the traffic scene ahead of and/or behind the vehicle and compare the sampled values with predefinable values and that output a signal to the vehicle driver regarding the immediate readiness to drive off when the sampled values exceed the predefined values.

4. Method according to one of Claims 1 to 3, **characterized in that** the driving-off process is performed when the vehicle driver acknowledges the readiness to drive off signal or immediate readiness to drive off through an input by way of input means.

5. Method for optimizing driving times using a driver assistance system that is designed such that it autonomously brakes and drives off the vehicle by way of sensors when driving through congestion, wherein the driving time is recorded within a temporal recording interval and is compared with a maximum driving time permissible within the temporal recording interval, and wherein, when the maximum permissible driving time is complied with, the temporal recording interval is not registered as driving time, wherein provision is made on the vehicle for means that sample the traffic scene ahead of and/or behind the vehicle and compare the sampled values with predefinable values, wherein the driving-off process is optimized in terms of driving time in that, in the case of a stationary vehicle within a temporal recording interval, the driving time accrued within this temporal recording interval is compared with a maximum driving time permissible within the temporal recording interval, and in that, in the case of an identified permissible remaining driving time and if the sampled values do not exceed the predefined values, driving off is delayed by the vehicle until the end of the maximum permissible driving time coincides with the end of the temporal recording interval following the renewed driving off, and in that provision is made for means that signal readiness to drive off while complying with the maximum permissible driving time.

6. Method according to Claim 3 or Claim 5, **characterized in that** the means are distance sensors and/or speed sensors.

7. Method according to one of Claims 3 to 6, **characterized in that** the predefinable values are able to be input by the vehicle driver by way of input means.

8. Method according to one of the preceding claims, **characterized in that** the readiness to drive off signal is selected from an acoustic, an optical and/or a haptic signal.

9. Method according to Claim 7 or 8, **characterized in that** the input means are selected from pushbuttons or rotary knobs, real or virtual keypads, touch-sensitive screens, cursor controllers or voice input systems.

10. Device for performing a method according to one of Claims 1 to 9, wherein the device consists at least of the following parts:

    - a first unit (1) for predefining a temporal recording interval,
    - a second unit (2) for predefining a maximum permissible driving time within such a temporal recording interval,
    - a driving time recording unit (3) that records the driving time within such a temporal recording interval,
    - a comparison unit (4) that compares the recorded driving time with the maximum permissible driving time,
    - a delay unit (5) that is designed, in the case of an identified permissible remaining driving time within such a temporal recording interval, to automatically delay renewed driving off following a stoppage such that the end of the maximum permissible driving time coincides with the end of the temporal recording interval following the renewed driving off, and
    - a signal device (6) for outputting signals when it is possible to drive off while complying with the maximum driving time.

11. Device according to Claim 10, **characterized in that** provision is made for immediate starting means (8) that allow immediate driving off in a manner triggered by the vehicle driver.

12. Device according to Claim 10 or 11, **characterized in that** provision is made for a sensor unit (30) that samples the traffic scene ahead of and/or behind the vehicle and compares the sampled values with predefinable values and interacts with the signal device (6) such that, when the sampled values exceed the predefined values, a signal regarding immediate readiness to drive off is output, wherein there is preferably provision for the sensor unit (30) to contain at least one distance sensor and/or at least one speed sensor.

13. Device according to one of Claims 10 to 12, **characterized in that** the signal device (6) is selected from an acoustic and/or optical and/or haptic unit.

14. Device according to one of Claims 10 to 13, **characterized in that** provision is made for an information unit that signals the remaining driving time $Lt_{Rest}$ available in the temporal recording interval T and/or the overall required waiting time Wt and/or the elapsed driving time Lt and/or the remaining waiting time $Wt_{Rest}$ to the vehicle driver.

**15.** Device according to Claim 14, **characterized in that** the information unit is an optical display that graphically displays a temporal recording interval T such that the overall required waiting time Wt is displayed in a first subregion (32), the remaining driving time $Lt_{Rest}$ still available is displayed in a second subregion (33) and the already elapsed driving time Lt is displayed in a third subregion (35), in each case in a proportional and optically distinguishable manner, and provision is made for an indicator (34) that moves along the temporal recording interval T in time increments, and wherein, in driving mode, the third subregion (35) that displays the elapsed driving time Lt dynamically becomes larger, the first subregion (32) that displays the overall required waiting time Wt stays the same and the second subregion (33) that displays the remaining driving time $Lt_{Rest}$ still available dynamically becomes smaller.

**16.** Device according to Claim 15, **characterized in that** the third subregion (35), the first subregion (32) and the second subregion (33') are immediately adjacent to one another.

**17.** Device according to Claim 15 or 16, **characterized in that** the first subregion (32, 32') and the third subregion (35, 35') are displayed in a manner distributed along the temporal recording interval T in accordance with the accrual thereof in terms of driving times and waiting times, and **in that** the second subregion (33"), displaying the remaining driving time $Lt_{Rest}$, is displayed in a manner extending backwards from the end of the temporal recording interval T and becomes dynamically smaller in accordance with the driving time Lt accrued within the temporal recording interval T.

**18.** Device according to one of Claims 14 to 17, **characterized in that** the information unit involves a voice output.

**19.** Vehicle, in particular utility vehicle, comprising a device according to one of Claims 10 to 18.

**Revendications**

**1.** Procédé d'optimisation du temps de conduite de véhicules, le temps de conduite étant acquis dans un intervalle d'acquisition de temps et comparé à un temps de conduite maximum autorisé dans l'intervalle d'acquisition de temps, et l'intervalle d'acquisition de temps n'étant pas enregistré comme temps de conduite lorsque le temps de conduite maximum autorisé est respecté, **caractérisé en ce que**, lorsqu'un véhicule est à l'arrêt dans un intervalle d'acquisition de temps, le temps de conduite dans l'intervalle d'acquisition de temps est comparé à un temps de conduite maximum autorisé dans l'intervalle d'acquisition de temps et **en ce que**, lorsqu'un temps de conduite restant autorisé a été défini, un démarrage est retardé côté véhicule jusqu'à ce que, après le redémarrage, la fin du temps de conduite maximum autorisé coïncide avec la fin de l'intervalle d'acquisition de temps, et **en ce que** des moyens sont prévus qui signalent une disponibilité de démarrage tout en respectant le temps de conduite maximum autorisé.

**2.** Procédé selon la revendication 1, **caractérisé en ce que** des moyens actionnables par le conducteur du véhicule sont prévus qui déclenchent un démarrage immédiat dans l'intervalle d'acquisition de temps, **en ce que** le temps de conduite est acquis de manière cumulée et **en ce que**, à chaque nouvel arrêt du véhicule dans l'intervalle d'acquisition de temps, le temps de conduite cumulé dans cet intervalle d'acquisition de temps est comparé à un temps de conduite maximum autorisé dans l'intervalle de temps et **en ce que**, lorsqu'un temps de conduite restant autorisé a été défini, le démarrage est retardé côté véhicule, en particulier de manière autonome, jusqu'à ce que, après le redémarrage, la fin du temps de conduite maximum autorisé coïncide avec la fin de l'intervalle d'acquisition de temps.

**3.** Procédé selon la revendication 1 ou 2, **caractérisé en ce que** des moyens sont prévus au niveau du véhicule qui analysent la situation de circulation devant et/ou derrière le véhicule et comparent les valeurs d'analyse à des valeurs spécifiables et qui délivrent au conducteur du véhicule, seulement lorsque les valeurs échantillonnées dépassent les valeurs spécifiées, un signal de disponibilité de démarrage immédiat du véhicule.

**4.** Procédé selon l'une des revendications 1 à 3, **caractérisé en ce que** le processus de démarrage est effectué lorsque le conducteur du véhicule accuse réception du signal de disponibilité au démarrage ou de disponibilité de démarrage immédiat par une entrée à l'aide de moyens d'entrée.

**5.** Procédé d'optimisation de temps de conduite au moyen d'un système d'assistance à la conduite conçu de façon à freiner et démarrer automatiquement le véhicule au moyen de capteurs lors de la conduite dans un embouteillage, le temps de conduite étant acquis dans un intervalle d'acquisition de temps et comparé à un temps de conduite maximum autorisé dans l'intervalle d'acquisition de temps, et l'intervalle d'acquisition du temps n'étant pas enregistré comme temps de conduite lorsque le temps de conduite maximum autorisé est respecté, des moyens étant prévus au niveau du véhicule pour analyser la situation de circulation devant et/ou derrière le véhicule et pour comparer les valeurs d'analyse à des valeurs spécifiables, le processus de démarrage étant optimisé en termes de temps de conduite en ce que, lorsqu'un véhicule est à l'arrêt dans un intervalle d'acquisition de temps, le temps de conduite dans cet intervalle d'acquisition de temps est comparé à un temps de conduite maximum autorisé dans l'intervalle d'acquisition de temps, et en ce que, lorsqu'un temps de conduite restant autorisé a été défini et dans le cas où les valeurs d'analyse ne dépassent pas les valeurs spécifiées, un démarrage est retardé côté véhicule jusqu'à ce que, après le redémarrage, la fin du temps de conduite maximum autorisé coïncide avec la fin de l'intervalle d'acquisition de temps, et en ce que des moyens sont prévus qui signalent une disponibilité de démarrage tout en respectant le temps de conduite maximum autorisé.

6. Procédé selon la revendication 3 ou la revendication 5, **caractérisé en ce que** les moyens sont des capteurs de distance et/ou des capteurs de vitesse.

7. Procédé selon l'une des revendications 3 à 6, **caractérisé en ce que** les valeurs spécifiables peuvent être entrées par le conducteur du véhicule à l'aide de moyens d'entrée.

8. Procédé selon l'une des revendications précédentes, **caractérisé en ce que** le signal de disponibilité de démarrage est choisi parmi un signal acoustique, un signal optique et/ou un signal haptique.

9. Procédé selon la revendication 7 ou 8, **caractérisé en ce que** les moyens d'entrée sont choisis parmi les commutateurs rotatifs ou à action fugitive, les claviers réels ou virtuels, les écrans tactiles, les commandes par curseur ou les systèmes d'entrée vocale.

10. Dispositif destiné à mettre en oeuvre un procédé selon l'une des revendications 1 à 9, le dispositif comprenant au moins les éléments suivants :

  - un premier organe (1) destiné à spécifier un intervalle d'acquisition de temps,
  - un deuxième organe (2) destiné à spécifier un temps de conduite maximum autorisé dans un tel intervalle d'acquisition de temps,
  - un organe d'acquisition de temps de conduite (3) qui acquiert le temps de conduite dans un tel intervalle d'acquisition de temps,
  - un organe de comparaison (4) qui compare le temps de conduite acquis au temps de conduite maximum autorisé,
  - un organe de retard (5) qui est conçu de manière à retarder automatiquement le redémarrage après un arrêt lorsqu'un temps de conduite restant autorisé a été défini dans un tel intervalle d'acquisition de temps, de telle sorte que, après le redémarrage, la fin du temps de conduite maximum autorisé coïncide avec la fin de l'intervalle d'acquisition de temps et
  - un dispositif de signalisation (6) destiné à délivrer un signal lorsque le démarrage est possible tout en respectant le temps de conduite maximum.

11. Dispositif selon la revendication 10, **caractérisé en ce que** des moyens de démarrage immédiat (8) sont prévus qui permettent un démarrage immédiat déclenché par le conducteur du véhicule.

12. Dispositif selon la revendication 10 ou 11, **caractérisé en ce qu'**un organe capteur (30) est prévu qui analyse la situation de la circulation devant et/ou derrière le véhicule et compare les valeurs d'analyse à des valeurs spécifiables et coopère avec le dispositif de signalisation (6) de façon à délivrer un signal de disponibilité de démarrage immédiat seulement lorsque les valeurs d'analyse dépassent les valeurs spécifiées, l'organe capteur (30) étant de préférence prévu pour contenir au moins un capteur de distance et/ou au moins un capteur de vitesse.

13. Dispositif selon l'une des revendications 10 à 12, **caractérisé en ce que** le dispositif de signalisation (6) est choisi parmi un organe acoustique et/ou un organe optique et/ou un organe haptique.

14. Dispositif selon l'une des revendications 10 à 13, **caractérisé en ce qu'**un organe d'information est prévu qui signale au conducteur du véhicule le temps de conduite restant $Lt_{Rest}$ disponible dans l'intervalle d'acquisition de temps T et/ou le temps d'attente total nécessaire Wt et/ou le temps de conduite accumulé Lt et/ou le temps d'attente restant $Wt_{Rest}$.

15. Dispositif selon la revendication 14, **caractérisé en ce que** l'organe d'information est un afficheur optique qui représente graphiquement un intervalle d'acquisition de temps T de telle sorte que le temps d'attente total nécessaire Wt est représenté dans une première sous-zone (32), le temps de conduite restant encore disponible $Lt_{Rest}$ est représenté dans une deuxième sous-zone (33) et le temps de conduite déjà écoulé Lt est représenté dans une troisième sous-zone (35), et ce à chaque fois de manière proportionnelle et visuellement distinguable, et un pointeur (34) est prévu qui se déplace le long de l'intervalle d'acquisition de temps T par incréments de temps et, pendant l'opération de conduite, la troisième sous-zone (35), qui représente le temps de conduite écoulé Lt augmentant de manière dynamique, la première sous-zone (32), qui représente le temps d'attente total nécessaire Wt, restant la même et la deuxième sous-zone (33), qui représente le temps de conduite restant disponible $Lt_{Rest}$, étant réduite de manière dynamique.

16. Dispositif selon la revendication 15, **caractérisé en ce que** la troisième sous-zone (35), la première sous-zone (32) et la deuxième sous-zone (33') sont rangées directement les unes à côté des autres.

17. Dispositif selon la revendication 15 ou 16, **caractérisé en ce que** la première sous-zone (32, 32') et la troisième sous-zone (35, 35') sont représentées de manière répartie le long de l'intervalle d'acquisition de temps T en fonction de leur occurrence dans les temps de conduite et les temps d'attente, et **en ce que** la deuxième sous-zone (33"), représentant le temps de conduite restant $Lt_{Res}t$, est représentée comme s'étendant vers l'arrière à partir de la fin de l'intervalle d'acquisition de temps T et est réduite de manière dynamique en fonction du temps de conduite Lt dans l'intervalle d'acquisition de temps T.

18. Dispositif selon l'une des revendications 14 à 17, **caractérisé en ce que** l'organe d'information est une sortie vocale.

19. Véhicule, en particulier véhicule utilitaire, qui comprend un dispositif selon l'une des revendications 10 à 18.

Fig. 1

```
                    ┌──────────┐
                    │  Start   │
                    └──────────┘
```

10 — Fahrzeug Stillstand ?
   nein →  go / stopp — Erfassung Lenkzeit Lt  — 11

   ja

12 — Lt_max > Lt
   nein → Startbefehl ?  — 13
   ja → 15

15 — Startbefehl ?
   nein
   ja → 16

16 — Sofortstartbefehl ?
   ja → Anfahrroutine starten — 14

   nein

17 — Abfrage t= T-Lt-Wt
   nein → Sofortstartbefehl ? — 18
   ja

19 — Startbefehl ?
   nein
   ja

20 — go / Signal / stopp

## Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012006838 A1
- WO 2014147145 A1
- DE 10349434 A1
- EP 0785533 A2